# EUROPEAN PATENT APPLICATION

(11) **EP 3 552 864 A1**
(43) Date of publication of application: **16.10.2019**
(21) Application number: 17879868.2
(22) Date of filing: 06.12.2017
(51) Int. Cl.: B60L 15/20, B60L 3/00, B60L 9/18

(54) **VEHICLE CONTROL DEVICE**

(30) Priority: 12.12.2016 JP 2016240033
(71) Applicant: NTN Corporation, Osaka-shi, Osaka 550-0003 (JP)
(72) Inventor: UCHIYAMA, Naoyuki, Iwata-shi Shizuoka 438-8510 (JP)
(74) Representative: Maikowski & Ninnemann Patentanwälte Partnerschaft mbB
(86) International application number: PCT/JP2017/043867
(87) International publication number: WO 2018/110394

(57) **Abstract**

Provided is a vehicle control device that can contribute to ensuring safety of a vehicle by immediately detecting a tendency for a wheel to be locked and can have a reduced number of rotation speed detection devices. The vehicle control device for controlling a motor (4) in a motor-equipped vehicle includes The vehicle control device includes a module (39) determining that the a drive wheel (2) is tending to be locked, when the speed difference between left and right drive wheels (2, 2) exceeds a first predetermined speed difference value and the deceleration of a first drive wheel (2) with a lower speed exceeds a predetermined deceleration value and is greater than a deceleration of a second drive wheel with a higher speed, in a state without operation of brakes (8).

## Description

### CROSS REFERENCE TO THE RELATED APPLICATION

This application is based on and claims Convention priority to Japanese patent application No. 2016-240033, filed December 12, 2016, the entire disclosure of which is herein incorporated by reference as a part of this application.

### BACKGROUND OF THE INVENTION

### (Field of the Invention)

The present invention relates to a vehicle control device for immediately detecting wheel locking in a vehicle including an electric motor, such as an in-wheel motor and a two motor on-board, to ensure safety of the vehicle.

### (Description of Related Art)

As inventions regarding wheel locking, the following inventions have been proposed.

In a vehicle including electric motors capable of individually controlling torque to be applied to a plurality of drive shafts, a technique to detect the rotation speed of each drive shaft for driving a wheel and the rotation speed of an output shaft of each motor for driving the drive shaft and detect wheel locking on the basis of change of the speed of the wheel drive shaft and change of the speed of the motor output shaft, has been proposed (Patent Document 1).

Moreover, in a device for control during locking of one wheel of a right-left independent drive vehicle, a technique to detect a driving force with a load sensor provided at a hub of each drive wheel and determine a locked state on the basis of the difference between the driving forces of the left and right drive wheels, or detect rotation speeds from respective rotation detection devices for the left and right wheels and determine whether either wheel is in a locked state, on the basis of the difference between the rotation speeds, has been proposed (Patent Document 2).

### [Related Document]

### [Patent Document]

[Patent Document 1] JP Laid-Open Patent Publication No. 2011-217514
[Patent Document 2] JP Laid-Open Patent Publication No. 2013-256254

### SUMMARY OF THE INVENTION

In the technique described in Patent Document 1, for one drive shaft, a rotation speed detection detector needs to be provided at each of a motor output shaft and a wheel drive shaft. Patent Document 2 states that wheel locking is determined on the basis of the difference between the rotation speeds of the left and right wheels, but fails to describe a specific method for the determination.

An object of the present invention is to provide a vehicle control device that solves the above problems, which contributes to ensuring safety of a vehicle by immediately detecting a tendency for a wheel to be locked, and has a reduced number of rotation speed detection devices.

Hereinafter, for convenience of easy understanding, a description will be given with reference to the reference numerals in embodiments.

A vehicle control device according to a first aspect of the present invention is a vehicle control device for controlling left and right electric motors 4, 4 in a vehicle including
the left and right electric motors 4, 4 for individually controlling torque to be applied to respective left and right drive wheels 2, 2, the left and drive wheels 2, 2 forming a pair of front wheels or a pair of rear wheels,
left and right rotation detection devices 17, 17 configured to detect rotation speeds of the respective left and right drive wheels 2, 2, each of the rotation detection devices 17, 17 being configured to monitor rotation at a location between a corresponding motor 4 of the left and right motors 4, 4 and a corresponding drive wheel 2 of the left and right drive wheels 2, 2 to detect a rotation speed of the corresponding drive wheel 2, and
brakes 8, 8, 8, 8 configured to brake respective wheels of the pair of front wheels and the pair of rear wheels, the vehicle control device including:
a speed difference calculation module 34 configured to calculate a speed difference between the left and right drive wheels 2, 2 from the rotation speeds detected by the respective left and right rotation detection devices 17, 17;
a deceleration calculation module 35 configured to calculate decelerations of the left and right drive wheels 2, 2 from the rotation speeds detected by the respective left and right rotation detection devices 17, 17;
a left-right wheel speed difference determination module 36 configured to determine whether the speed difference calculated by the speed difference calculation module 34 exceeds a first predetermined speed difference value;
a deceleration determination module 37 configured to determine whether a deceleration of a first drive wheel 2 of the left and right drive wheels 2, 2 having a lower rotation speed exceeds a predetermined deceleration value and is greater than a deceleration of a second drive wheel 2 of the left and right drive wheels 2 having a higher rotation speed, 2, the rotation speeds of the first and second drive wheel 2, 2 being detected by the respective detection devices 17, 17;
a locking determination module 39 configured to determine that the first drive wheel 2 is tending to be locked when the left-right wheel speed difference determination module 36 determines that the speed difference exceeds the first predetermined speed difference value and the deceleration determination module 37 determines that the deceleration of the first drive wheel 2 exceeds the predetermined deceleration value and is greater than the deceleration of the second drive wheel 2, in a state without manipulation of a brake operation mechanism 14 for operating the brakes 8.

According to this configuration, the locking determination module 39 determines that the first drive wheel 2, that is, the drive wheel 2 having a lower speed and a greater deceleration, is tending to be locked. In the vehicle configured to individually control torque to be applied to the left and right drive wheels 2, 2, in a state where the vehicle is running at a speed equal to or higher than the predetermined speed value from the detected rotation speed and the brakes 8 are not being operated, rapid deceleration of only one of the left and right drive wheels 2, 2 would not occur during normal running. When the speed difference between the left and right drive wheels 2, 2 exceeds the preset predetermined speed difference value, there is a possibility that some sort of trouble has occurred. In this case, the decelerations of the left and right wheels 2, 2 are calculated, and it can be determined that there is a locking tendency, when the deceleration of the drive wheel 2 having a lower rotation speed is greater than that of the drive wheel having a higher rotation speed and exceeds the preset predetermined deceleration value during deceleration.

Therefore, the speed difference and the deceleration difference between the left and right drive wheels 2, 2 are constantly monitored, the left-right wheel speed difference determination module 36 determines whether the speed difference between the left and right drive wheels 2, 2 exceeds the preset predetermined speed difference value, and the deceleration determination module 37 determines whether the deceleration of the drive wheel 2 having a lower rotation speed is greater than that of the drive wheel having a higher rotation speed and exceeds the preset predetermined deceleration value during deceleration. When both of the conditions are satisfied, the locking determination module 39 determines that the drive wheel 2 having a lower speed and a greater deceleration is tending to be locked. Thus, through this determination, whether there is a locking tendency can be appropriately determined.

Moreover, the vehicle control device having this configuration makes it sufficient to provide the rotation detection device at a location between the motor 4 and the drive wheel 2, that is, to provide it so as to monitor rotation at any location between the motor 4 and the drive wheel 2. A such, rotation detection devices do not need to be provided at both of the motor 4 and the drive wheel 2, resulting in simple configuration.

The determination by the left-right wheel speed difference determination module 36, the determination by the deceleration determination module 37, and determination as to whether the brakes 8 are being operated may be performed in any order. For example, if the determination as to whether the brakes 8 are being operated, the determination by the left-right wheel speed difference determination module 36, and the determination by the deceleration determination module 37 are performed in this order, when the condition is not satisfied in each determination, the determination by the subsequent module does not need to be performed, and thus efficient control can be achieved.

Moreover, each of the predetermined speed difference value and the predetermined deceleration value is any threshold that is set to an appropriate value through designing based on a test, simulation, or the like. The "deceleration" as used herein refers to an acceleration having a negative value.

The vehicle control device may further include an output torque limitation module 33 configured to, when the locking determination module 39 determines that the first drive wheel is tending to be locked, limit command torque for the motor 4 corresponding to the first drive wheel 2, to zero, and limit command torque for the motor 4 corresponding to the second drive wheel 2, to zero or a preset value greater than zero.

In a state where running is performed with the speed difference equal to or greater than the predetermined speed difference value and the brakes 8 are not operating, when a situation in which one wheel is rapidly decelerating occurs, there is a high possibility that the drive wheel 2 has fallen into a tendency to be locked due to some sort of trouble. Thus, the driving torque is limited or set to zero, resulting in inertia running or running at a low speed with only the normal drive wheel. When the drive wheel 2 has fallen into a tendency to be locked, the torque for the drive wheel 2 in which trouble has occurred is set to zero, and the torque for the normal drive wheel is also limited, whereby the speed of the entire vehicle is reduced. When the vehicle is moved to a safe place after such running at a low speed is caused, it is possible to avoid a situation in which the vehicle falls into a completely uncontrollable state, and ensure safety of the driver and the vehicle.

When the locking determination module 39 determines that there is a locking tendency, the driver is notified by the warning display 19 through an image, sound, or the like that an abnormality is present, to urge the driver to move the vehicle to a safe place, which is preferable in terms of ensuring safety of the driver and the vehicle.

After starting to limit the command torque for the motors 4,4 corresponding to the first and second drive wheels, respectively, the output torque limitation module 33 may quit limiting the command torque for the motors 4, 4 and cancel the determination by the locking determination module 39 that the first drive while is tending to be locked when the speed difference between the left and right drive wheels calculated by the speed difference calculation module 34 is reduced below a second predetermined speed difference value.

As described above, when the drive wheel 2 has fallen into a tendency to be locked, the speed of the entire vehicle is reduced by performing torque limitation. When the speeds of both left and right drive wheels 2, 2 become substantially equal to each other, it is considered that the vehicle speed has sufficiently decreased to reach a safe speed. Thus, the determination that there is a locking tendency is cancelled. The "second predetermined speed difference value" is a predetermined speed difference value for locking release, and is determined as appropriate, for example, as a value that can be considered as nearly zero.

Each of the predetermined speed difference value and the predetermined deceleration value may vary among during constant-speed running, during accelerated running, and during decelerated running. During constant-speed running, during accelerated running, and during decelerated running, when a locked state occurs, the speed difference and the acceleration difference between the normal wheel and the abnormal wheel (the wheel that is tending to be locked) are different. Thus, when the predetermined speed difference value and the predetermined deceleration value for abnormality detection are made different for each running state, a locking tendency can be more accurately determined.

A vehicle control device according to a second aspect of the present invention is a vehicle control device for controlling electric motors 4 in a vehicle in which left and right wheels that are either left and right front wheels or left and right rear wheels are drive wheels 2, 2 driven by the electric motors 4, and the other left and right wheels are driven wheels 3, 3, the vehicle including
rotation detection devices 17, 18 configured to detect a rotation speed of at least one of the drive wheels and a rotation speed of at least one of the driven wheels, respectively, the at least one of the driven wheels corresponding to the at least one of the drive wheels, and
brakes 8 configured to brake respective wheels of the left and right front wheels and the left and right rear wheels, the vehicle control device including:
a deceleration calculation module 55 configured to calculate a deceleration of the at least one of the drive wheels and a deceleration of the at least one of the driven wheels 3 from the rotation speeds detected by the respective rotation detection devices 17, 18;
a front-rear wheel speed difference determination module 56 configured to determine whether the speed of the at least one of the driven wheels 3 exceeds the speed of the at least one of the drive wheels 2, on the basis of the rotation speeds detected by the respective rotation detection devices 17, 18;
a deceleration determination module 57 configured to determine whether the deceleration of the at least one of the drive wheels 2 exceeds a predetermined deceleration value and the deceleration of the at least one of the drive wheels 2 is greater than the deceleration of the at least one of the driven wheels 3; and
a locking determination module 59 configured to determine that the at least one of the drive wheels 2 is tending to be locked when the front-rear wheel speed difference determination module determines that the speed of the at least one of the driven wheels 3 exceeds the speed of the at least one of the drive wheels 2 and the deceleration determination module 57 determines that the deceleration of the at least one of the drive wheels 2 exceeds the predetermined deceleration value and the deceleration of the at least one of the drive wheels exceeds the deceleration of the at least one of the driven wheels 3, in a state without manipulation of a a brake operation mechanism 14 for operating the brakes 8.

In the vehicle control device according to the first aspect, whether there is a locking tendency is determined on the basis of the rotation speed difference between and the decelerations of the left and right drive wheels. Similar to the first aspect, whether there is a locking tendency can be also determined on the basis of the rotation speed difference between and the decelerations of the drive wheel and the driven wheel at the front side and the rear side, that is, the drive wheel and the driven wheel located at the same side of the vehicle, which enables the number of rotation detection devices to be reduced. In the case where such determination is performed on the basis of the rotation speed difference between and the decelerations of the drive wheel and the driven wheel located at the front side and the rear side, the coefficient of friction may be greatly different between the left side and the right side of a road surface, that is, the road surface may be a so-called split-µ road surface, and thus such determination is desirably performed on the basis of the left wheels and/or the right wheels. However, such determination may be performed on the basis of the average speeds and the average decelerations of the left and right wheels.

When the brakes 8 operate, the locking determination by the locking determination module 39 may be stopped. The "brakes" may be service brakes such as mechanical brakes, hydraulic brakes, and brakes called regular brakes, which are provided to the drive wheels 2, 2 and the driven wheels 3, 3.

The locking determination module determines a tendency of the drive wheel 2 or a drive system therefor to be locked, on the basis of rapid deceleration of the drive wheel 2, and it may be difficult to distinguish this deceleration from deceleration caused by actuating the brakes 8 such as mechanical brakes. Thus, the locking determination by the locking determination module 39 is preferably stopped.

Each of the motors may be formed in a corresponding in-wheel motor drive device. When the vehicle includes in-wheel motor drive devices, a weight below each suspension, that is, a so-called unsprung weight, is increased. In such a vehicle, determination as to a locking tendency can be effectively performed.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 illustrates a conceptual configuration showing an example of a vehicle equipped with a vehicle control device according to a first or second embodiment of the present invention;
Fig. 2 is a block diagram of a conceptual configuration of the vehicle control device according to the first embodiment;
Fig. 3 is a flowchart illustrating operation of locking determination and output control of the vehicle control device in Fig. 2;
Fig. 4A is a graph showing change over time of speeds of a normal shaft and a locked shaft during constant-speed running;
Fig. 4B is a graph showing change over time of speeds of a normal shaft and a locked shaft during accelerated running;
Fig. 4C is a graph showing change over time of speeds of a normal shaft and a locked shaft during decelerated running;
Fig. 5 is a flowchart illustrating operation of locking determination and output control of a modified example of the vehicle control device according to the first embodiment;
Fig. 6 is a block diagram showing a conceptual configuration of the vehicle control device according to the second embodiment;
Fig. 7 is a flowchart illustrating operation of locking determination and output control of the vehicle control device in Fig. 6;
Fig. 8 is a schematic longitudinal sectional view of an example of an in-wheel motor drive device;
Fig. 9 schematically illustrates an example of a two motor on-board system.

### DESCRIPTION OF EMBODIMENTS

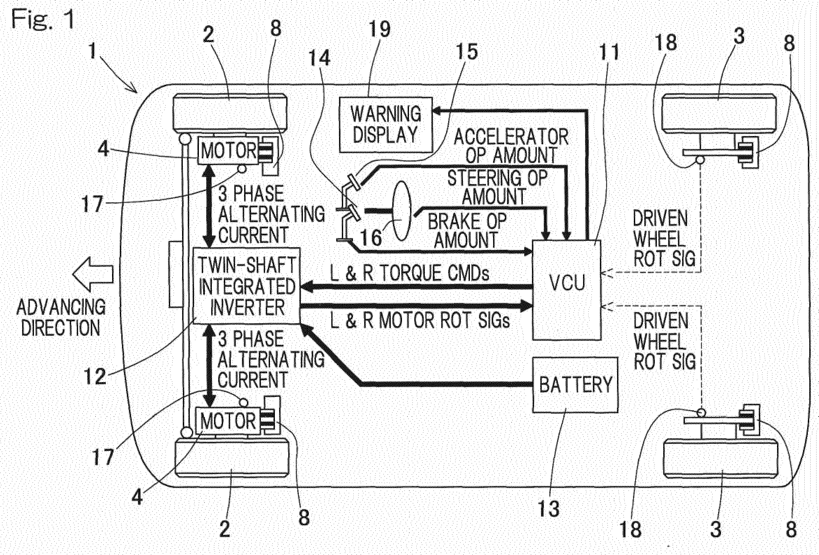

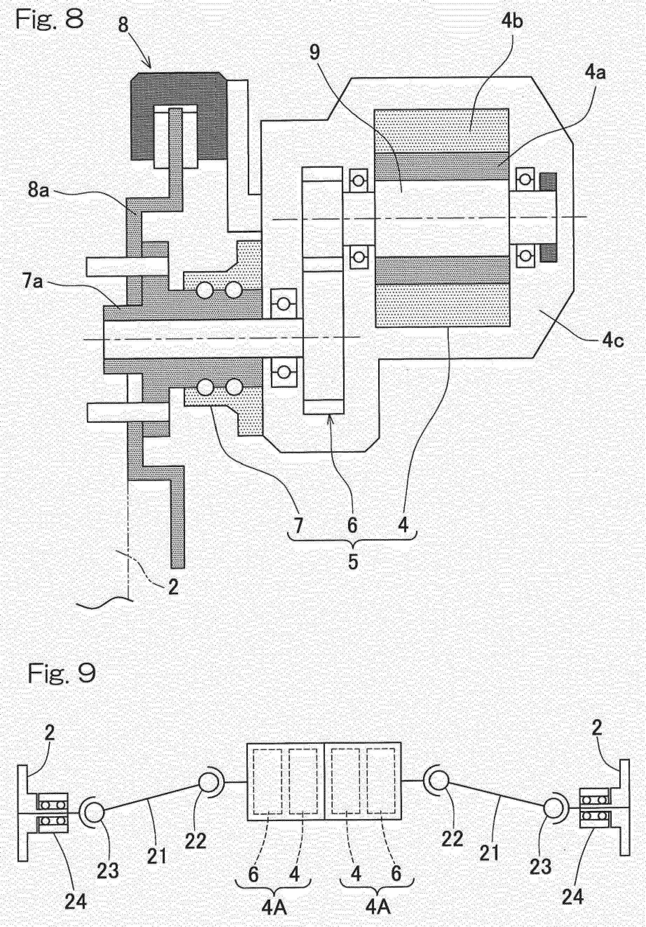

A first embodiment of the present invention will be described with reference to Fig. 1 to Fig. 3 and Fig. 4A to Fig. 4C. In Fig. 1, drive wheels 2, 2 that are front wheels are provided at a front portion of a vehicle body (vehicle) 1, and driven wheels 3, 3 that are rear wheels are provided at a rear portion of the vehicle body (vehicle) 1. The left and right drive wheels 2, 2 are driven by left and right electric motors 4, 4, respectively. Each of the motors 4, 4 may be a synchronous motor or an induction motor and is driven by three-phase alternating current. As shown in Fig. 8, as one example, each motor 4 includes a rotor 4a, a stator 4b, and a case 4c, and forms an in-wheel motor drive device 5 together with a wheel bearing 7 and a speed reducer 6. Output of an output shaft 9 of the motor 4 is inputted to the speed reducer 6, and the output of which the speed is reduced by the speed reducer 6 is transmitted to a rotating ring 7a, realized by an inner ring of the wheel bearing 7.

The rotating ring 7a of the wheel bearing 7 including a flange portion, on which a wheel (not shown) and a brake rotor 8a of a brake 8 are mounted. The brake 8 is a service brake such as a mechanical brake, a hydraulic brake, and an electric brake. Such a brake 8 is also installed for each of the driven wheels 3, 3 in Fig. 1.

Each motor 4 is not limited to a motor that forms a part of the in-wheel motor drive device 5, and may be a motor mounted as an on-board type. Fig. 9 shows an example of a two motor on-board system. An output shaft of each speed reducer-equipped motor 4A that includes the motor 4 and the speed reducer 6 is coupled to a rotating ring of a wheel bearing 24 via a drive shaft 21 and constant velocity universal joints 22 and 23 at both ends of the drive shaft 21. The speed reducer-equipped motor 4A is mounted on a chassis (not shown).

In Fig. 1, each of the motors 4, 4 is driven via: a VCU (vehicle control device) 11, which is a higher-order control means that performs integrated control of the vehicle; and a twin-shaft integrated inverter device 12. Signals of an operation amount of an accelerator operation mechanism such as an accelerator pedal 15 or the like to be operated by a driver, an operation amount of a brake operation mechanism such as a brake pedal 14 or the like to be operated by the driver, and a steering amount of a steering operation mechanism such as a steering wheel 16 or the like to be operated by the driver are inputted to the VCU 11. On the basis of these signals, the VCU 11 outputs, to the twin-shaft integrated inverter device 12, torque commands for driving the left and right drive wheels 2, 2, respectively. On the basis of the torque commands from the VCU 11, the twin-shaft integrated inverter device 12 outputs driving currents for controlling the motors 4, 4. The "VCU" is also referred to as "ECU (electronic control unit)".

When the twin-shaft integrated inverter device 12 receives rotation signals from rotation detection devices 17, 17 provided to the left and right motors 2, 2, respectively, the twin-shaft integrated inverter device 12 uses the rotation signals for motor control, and outputs the signals to the VCU 11 as well. Each rotation detection device 17 is composed of a rotation detection sensor such as a resolver. The VCU 11 has a function of determining a locked state of either one or each of the motors 4 (a state where either one or each of the motors 4 is tending to be locked), in other words, a locked state of either one or each of the drive wheels 2, 2 (a state where either one or each of the drive wheels 2 is tending to be locked), on the basis of the rotation signals for the left and right motors 4, 4 received from the inverter device 12. When the VCU 11 detects the locked state, the VCU 11 displays an abnormality signal on a warning display 19, and, also limits torque command values to be outputted to the inverter device 12 (the magnitudes of the above torque commands) to reduce motor torque or make the motor torque zero. The warning display 19 is a display device with liquid crystal or the like that is provided at a driver's seat, or a device that sends a notice to the driver by sound such as voice.

In this embodiment, rotation detection devices 18, 18 are also provided for the respective driven wheels 3, 3. Rotation detection signals of these rotation detection devices 18, 18 are inputted to the VCU 11.

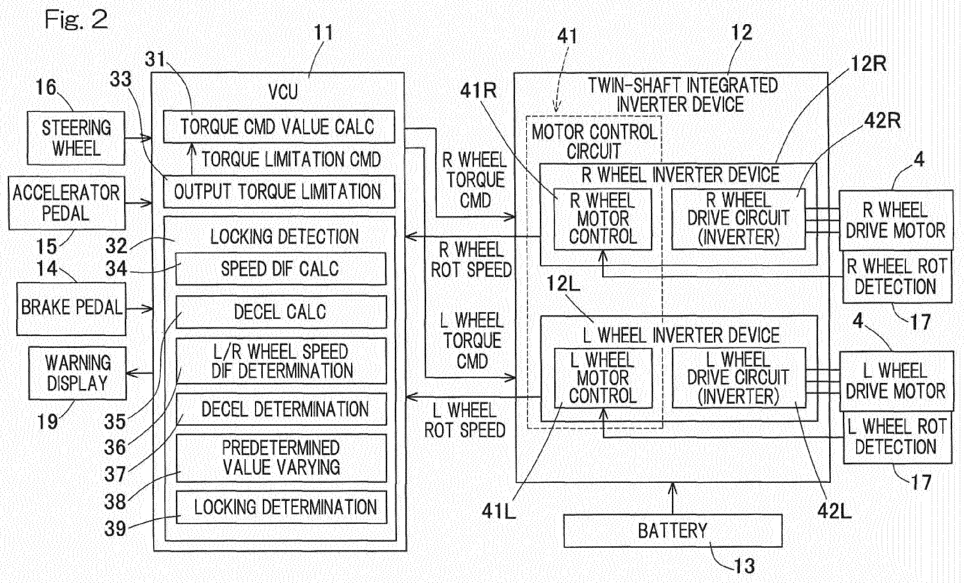

Fig. 2 is a block diagram schematically showing a conceptual configuration of the vehicle control device.

The twin-shaft integrated inverter device 12 includes: drive circuits 42L and 42R that drive the respective left and right motors; and a motor control circuit 41 that controls these drive circuits 42L and 42R. Each of the drive circuits 42L and 42R is a power circuit, and is composed of: an inverter including a bridge circuit of semiconductor switching elements such as IGBTs, or the like, which converts DC power of a battery 13 to three-phase AC power to be used for driving the corresponding motor 4; and a driver circuit such as a PWM driver that performs control of opening/closing of the semiconductor switching elements of the corresponding inverter through pulse-width control or the like (both are not shown).

In this embodiment, the motor control circuit 41 includes a one-chip or one-board microcomputer and a program that is to be executed by the microcomputer. The microcomputer includes various electronic circuits such as a CPU (central processing unit), a memory, and an I/O port. The motor control circuit 41 has two individual motor control units 41L and 41R that control the drive circuits 42L and 42R for the left and right motors 4, 4, respectively. The left-side drive circuit 42L and the one motor control unit 41L that controls the left-side drive circuit 42L conceptually form a left-side inverter device unit 12L while the right-side drive circuit 42R and the one motor control unit 41R that controls the right-side drive circuit 42R conceptually form a right-side inverter device unit 12R. The two individual motor control units 41L and 41R only need to be conceptually separated from each other, and may be formed by one microcomputer and a program for the microcomputer. Alternatively, in contrast to this, the left and right motor control units 41L and 41R may be formed by independent circuit elements and programs.

The individual motor control units 41L and 41R of the motor control circuit 41 respectively control the magnitudes of current commands or the like to be provided to the drive circuits 42L and 42R, in accordance with the magnitudes of the torque commands for the left and right motors 4, 4 provided from the VCU 11. The motor control units 41L and 41R also monitor the respective detection signals of the rotation detection devices 17, 17 for the left and right motors 4, 4 to perform phase control such as vector control for driving the motors efficiently.

In the VCU 21, an accelerator operation amount that is an operation amount of the accelerator pedal 15 or the like, a brake operation amount of the brake pedal 14 or the like, a steering operation amount of the steering wheel 16 or the like are inputted to a torque command value calculation module 31 within the VCU, and the torque command value calculation module 31 outputs torque commands for driving the left and right motors 4, 4, to the twin-shaft integrated inverter device 12 according to a predetermined rule.

The motor rotation detection signals inputted from the rotation detection devices 17, 17 for the respective left and right shafts to the motor control units 41L and 41R for two shafts of the twin-shaft integrated inverter device 12 are converted to speed signals by the motor control units 41L and 41R and outputted to the VCU 11. The VCU 11 has a locking detection module 32, which determines a locking tendency on the basis of the motor rotation speeds for the left and right drive wheels 2, 2 and a brake operation. When the locking detection module 32 determines that there is a locking tendency, the locking detection module 32 sends the result of the determination to the torque command value calculation module 31, and also outputs an abnormality signal to the warning display 19. When the torque command value calculation module 31 in the VCU 11 receives the locking tendency detection, torque command values for the left and right motors 4, 4 are limited by an output torque limitation module 33. The output torque limitation module 33 may be provided outside the torque command value calculation module 31, or may be included within the output torque limitation module 33.

Hereinafter, each of modules that perform locking detection and perform output torque limitation on the basis of the detection will be described.

The locking detection module 32 has a speed difference calculation module 34, a deceleration calculation module 35, a left-right wheel speed difference determination module 36, a deceleration determination module 37, a predetermined value varying module 38, and a locking determination module 39.

The speed difference calculation module 34 constantly calculates the speed difference between the left and right drive wheels 2, 2 from detection values of the rotation detection devices 17, 17. The phrase "constantly calculate" means that calculation is performed each time rotation speeds of the left and right wheels are inputted to the VUC 11. The deceleration calculation module 35 calculates decelerations of the respective left and right drive wheels 2, 2 from the detection values of the rotation detection devices 17, 17. The left-right wheel speed difference determination module 36 determines whether the speed difference between the left and right wheels calculated by the speed difference calculation module 34 exceeds a predetermined speed difference value (first predetermined speed difference value). The deceleration determination module 37 is configured to determine whether two conditions that the deceleration of the drive wheel 2 having a lower rotation speed, of the left and right drive wheels 2, 2, exceeds a predetermined deceleration value and is greater than that of the drive wheel 2 having a higher rotation speed, are satisfied.

The output torque limitation module 33 is confiture to, when the locking determination module 39 determines that there is a locking tendency, limit command torque for the motor 4 for the drive wheel 2 in which the locking tendency has occurred, to zero, and also limit or reduce driving torque for the motor 4 for the normal drive wheel 2 to zero or a preset value greater than zero.

Each of the rotation detection devices used for locking determination may be a device that detects rotation of the drive wheel 2 (Fig. 1), instead of the device that is provided to the motor 4 and detects a motor rotation speed as described above. Furthermore, instead, each rotation detection device may be a device that detects rotation of a certain part of a rotation transmission system between the motor 4 and the drive wheel 2, such as a speed reducer and a drive shaft.

Hereinafter, locking detection of the vehicle control device, operation accompanying the detection, and the details of the function of each of the above modules will be described.

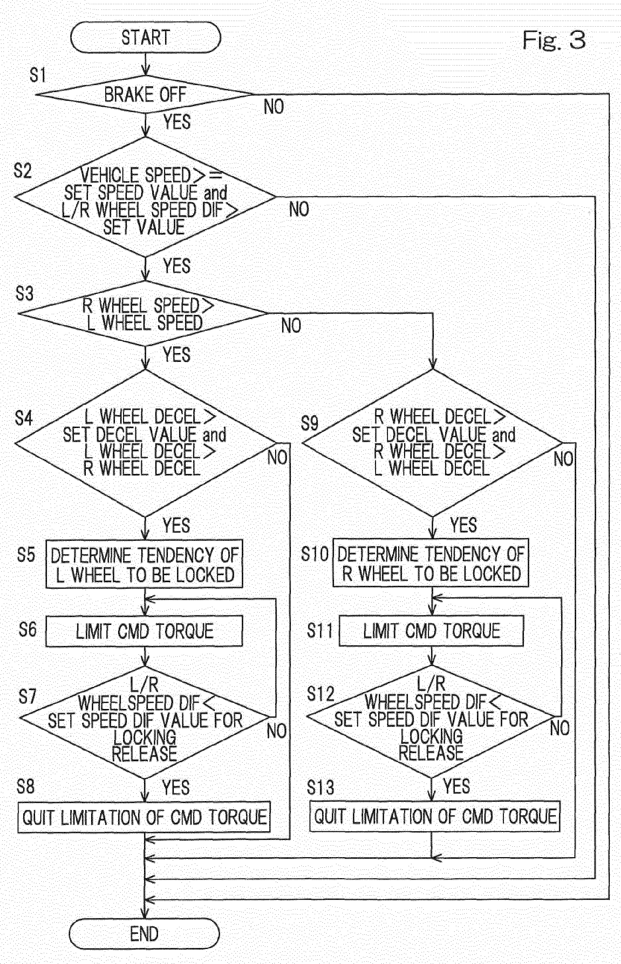

Fig. 3 shows flow of operation of locking determination and output limitation of the vehicle control device. Specifically, Fig. 3 shows flow of locking detection based on comparison of speeds/accelerations of the left and right drive wheels.

First, whether the brake pedal 14 is not being operated, that is, all the brakes 8 are OFF, is determined (step S1). This determination is performed by the locking determination module 39 in Fig. 2 or a brake determination module (not shown) included in the locking detection module 32, through monitoring an operation signal corresponding to an operation amount of the brake operation mechanism such as the brake pedal 14 or the like. When the brake pedal 14 is being operated, that is, when all the brakes 8 are ON (NO in step S1), the processing is ended and returned to START. After the return to START, in either case, the processing is started from step S1 again.

When the brake pedal 14 is not being operated (YES in step S1), the left-right wheel speed difference determination module 36 determines whether the speed difference calculated by the speed difference calculation module 34 exceeds the predetermined speed difference value (step S2). The left-right wheel speed difference determination module 36 also determines whether a vehicle speed exceeds a predetermined speed value. The vehicle speed is acquired, for example, from detection values of the rotation detection devices 18, 18 for the driven wheels 3, 3 or from a detection value of another vehicle speed detection device (not shown). When at least one of the conditions is not satisfied in the above determination (NO in step S2), the processing is ended and returned to START. The predetermined speed value for the vehicle speed is determined as appropriate through designing in advance.

When the vehicle speed exceeds the predetermined speed value and the speed difference between the left and right drive wheels 2, 2 (hereinafter, these drive wheels are sometimes abbreviated simply as "left and right wheels", and sometimes abbreviated as "left wheel" and "right wheel", respectively) exceeds the predetermined speed difference value (YES in step S2), the deceleration determination module 37 performs processes in steps S3, S4, and S9. In step S3, the deceleration determination module 37 determines which of the speeds of the left and right wheels is higher. When the speed of the right wheel is higher (YES in step S3), processes in steps S4 to S8 are performed. When the speed of the left wheel is higher (NO in step S3), processes in steps S9 to S13 are performed. The processes in steps S4 to S8 and the processes in steps S9 to S13 are the same except that the left wheel and the right wheel are replaced with each other. Therefore, the case where the speed of the right wheel is higher (steps S4 to S8) will be described here, and the description of the case where the speed of the left wheel is higher is omitted.

When the speed of the right wheel is higher, it is determined in step S4 whether two conditions that the deceleration of the left wheel, which is the drive wheel having a lower rotation speed, exceeds a predetermined deceleration value and the deceleration of the left wheel, which is the drive wheel having a lower rotation speed, is greater than the deceleration of the right wheel, which is the drive wheel having a higher rotation speed, are satisfied.

When the conditions in step S4 are not satisfied (NO in step S4), the locking determination module 39 ends the processing and returns to START. When the two conditions are satisfied, that is, when the deceleration of the left wheel exceeds the predetermined deceleration value and the deceleration of the left wheel exceeds the deceleration of the right wheel (YES in step S4), the locking determination module 39 determines that the left wheel is tending to be locked (step S5). The locking determination module 39 performs determination in step S10 as to a tendency of the right wheel to be locked.

When it is determined that the left wheel is tending to be locked, the output torque limitation module 33 performs the processes in step S6 to S8 (steps S11 to S13 when the right wheel is tending to be locked). In step S6, the output torque limitation module 33 limits command torque for the motor 4 for the left wheel, which is the drive wheel in which the locking tendency has occurred, to zero, and also limits driving torque for the motor 4 of the right wheel, which is the normal drive wheel, to zero or a preset value greater than zero. The "preset value" is any value that is determined through designing. However, the "preset value" is less than the current command torque, and the driving torque is always reduced when limiting the driving torque to the preset value.

Thereafter, the output torque limitation module 33 monitors the speed difference between the left and right wheels, and compares the speed difference between the left and right wheels to a predetermined speed difference value for locking release or quitting the limitation (second predetermined speed difference value) (step S7). When the speed difference between the left and right wheels is greater than the predetermined speed difference value for locking release (NO in step S7), the output torque limitation module 33 returns to step S6 and continues to limit the command torque. When the speed difference between the left and right wheels is less than the predetermined speed difference value for locking release (YES in step S7), the output torque limitation module 33 quits limiting the command torque for both the left and right wheels (step S8) and returns to START.

In the vehicle control device, as described above, in a state where the brake pedal 14 is not being operated, that is, all the brakes 8 are OFF, when: the speed difference exceeds the predetermined speed difference value as a result of the determination of the left-right wheel speed difference determination module 36; and the deceleration of the drive wheel 2 having a lower rotation speed, of the left and right drive wheels 2, exceeds the predetermined deceleration value and is greater than the deceleration of the drive wheel 2 having a higher rotation speed as a result of the determination of the deceleration determination module 37, the locking determination module 39 determines that the drive wheel 2 having a lower speed and a greater deceleration is tending to be locked.

In the vehicle configured to individually control torque to be outputted to the left and right drive wheels 2, in a state where the vehicle is running at a speed equal to or higher than the predetermined speed value, determined according to the detected rotation speed, and the brake pedal 14 is not being operated, rapid deceleration of only one of the left and right drive wheels 2, 2 would not occur during normal running. Thus, when the speed difference between the left and right drive wheels 2, 2 exceeds the preset predetermined speed difference value, it is predicted that there is a possibility that some sort of trouble has occurred. In this case, the decelerations of the left and right wheels 2, 2 are calculated, and it can be determined that there is a locking tendency, when the deceleration of the drive wheel 2 having a lower rotation speed is greater than that of the drive wheel having a higher rotation speed and exceeds the preset predetermined deceleration value during deceleration.

Therefore, the speed difference and the deceleration difference between the left and right drive wheels 2, 2 are constantly monitored, the left-right wheel speed difference determination module 36 determines whether the speed difference between the left and right drive wheels 2, 2 exceeds the preset predetermined speed difference value, and the deceleration determination module 37 determines whether the deceleration of the drive wheel 2 having a lower rotation speed is greater than that of the drive wheel having a higher rotation speed and exceeds the preset predetermined speed difference value during deceleration. When both of the conditions are satisfied, the locking determination module 39 determines that the drive wheel 2 having a lower speed and a greater deceleration is tending to be locked. Through this determination, whether there is a locking tendency can be appropriately determined.

The vehicle control device having this configuration makes it sufficient to provide a device that detects rotation at any location between the motor 4 and the drive wheel 2 as the rotation detection device. As such, rotation detection devices do not need to be provided at both of the motor 4 and the drive wheel 2, resulting in simple configuration.

Moreover, the output torque limitation module 33 limits the command torque when a wheel locks as described above, and thus safety of running is ensured as described below.

In a state where running is performed with the speed difference equal to or greater than the predetermined speed difference value and the brakes 8 are not operating, when a situation in which one wheel is rapidly decelerating occurs, there is a high possibility that the drive wheel 2 has fallen into a tendency to be locked due to some sort of trouble. Thus, the driving torque is limited, resulting in inertia running or running at a low speed with only the normal drive wheel. When the drive wheel 2 has fallen into a tendency to be locked, the torque for the drive wheel 2 in which trouble has occurred is set to zero, and the torque for the normal drive wheel is also limited, whereby the speed of the entire vehicle is reduced. By moving the vehicle to a safe place after such running at a low speed is caused, it is possible to avoid a situation in which the vehicle falls into a completely uncontrollable state, and ensure safety of the driver and the vehicle.

When the locking determination module 39 determines that there is a locking tendency, the driver is notified by the warning display 19 or sound or the like that an abnormality is present, to urge the driver to move the vehicle to a safe place, which is preferable in terms of ensuring safety of the driver and the vehicle.

When a left-right wheel speed difference that is the difference between the rotation speed of the drive wheel 2 determined to be tending to be locked and the rotation speed of the drive wheel 2 determined to be in a normal state becomes less than the predetermined speed difference value for locking release as shown in step S7, the output torque limitation module 33 quits limiting the torque, and the state where it is determined by the locking determination module 39 that there is a locking tendency is cancelled, that is, the processing is ended and returned to START. On the other hand, when the drive wheel 2 has fallen into a tendency to be locked, the speed of the entire vehicle is reduced by limiting the command torque. When the speeds of both left and right drive wheels 2, 2 become substantially equal to each other, it is considered that the vehicle speed has sufficiently decreased to reach a safe speed. Thus, the locking detection state is preferably terminated.

Although omitted in the above description given with reference to Fig. 3, the predetermined value varying module 38 that sets each of the predetermined speed difference value and the predetermined deceleration value to a different value for each of three running states, that is, during constant-speed running, during acceleration, and during deceleration, is provided (Fig. 2).

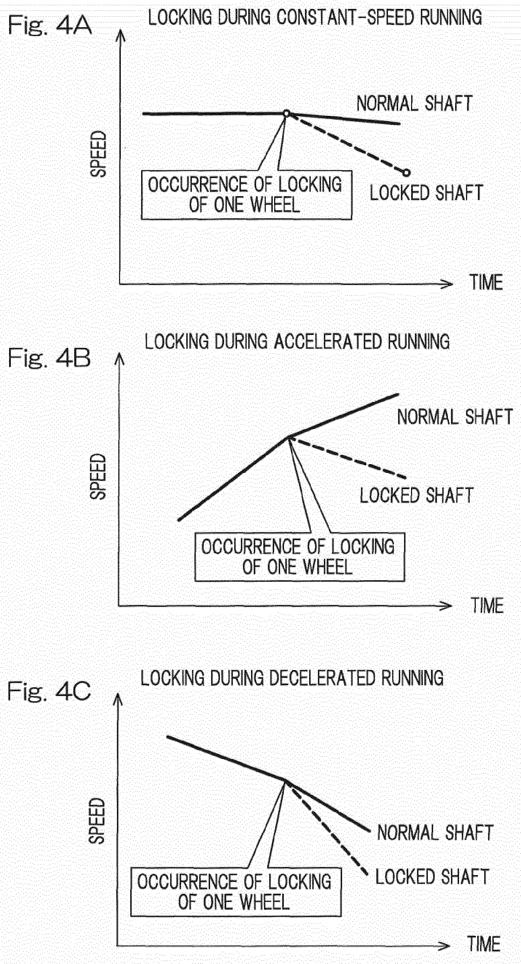

As shown in Fig. 4A to Fig. 4C, in each of the cases of (Fig. 4A) during constant-speed running, (Fig. 4B) during accelerated running, and (Fig. 4C) during decelerated running, when a locked state has occurred, that is, when it is determined that one wheel or a drive system therefor is tending to be locked, the speed difference and the acceleration difference between the normal wheel and the abnormal wheel (the drive wheel determined to be tending to be locked) are different. Thus, when a different abnormality detection threshold is set for each running state, a locking tendency can be more accurately determined.

In this embodiment, when the brakes 8 operate, the locking determination module 39 stops the locking determination. For example, when the brakes 8 are actuated during steps S2 to S5 (or S10) in Fig. 3 and before the locking determination is performed, the processing is ended and returned to START. In addition, when the brakes 8 are actuated after the command torque is limited (step S6, S11), the limitation of the command torque is quitted, and the processing is ended and returned to START.

The locking determination module 39 determines a tendency of the drive wheel 2 or a drive system therefor to be locked, on the basis of rapid deceleration of the drive wheel 2, and it may be difficult to distinguish this deceleration from deceleration caused by actuating the brakes 8 such as mechanical brakes. In addition, when an imbalance in braking force has occurred between the left and right drive wheels 2, a difference is produced between the decelerations of the left and right wheels due to the imbalance, and there is a possibility that this is determined as a locking tendency and false detection occurs. Thus, when the brakes 8 operate, the locking determination by the locking determination module 39 is preferably stopped.

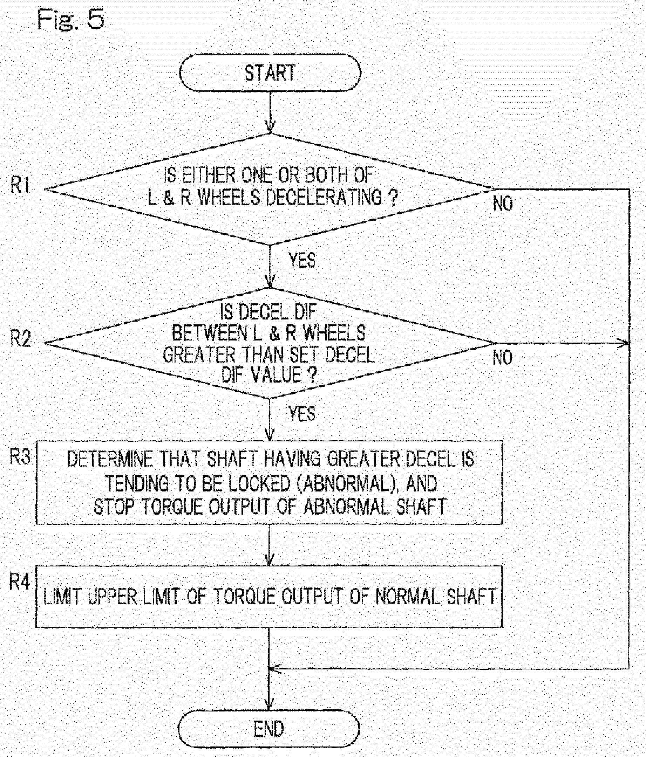

Fig. 5 shows a general outline of a modified example of the processes performed by the locking detection module 32 and the output torque limitation module 33 in the vehicle control device. Specifically, the locking detection module 32 and the output torque limitation module 33 perform the control shown in Fig. 3. However, instead, the locking detection module 32 and the output torque limitation module 33 may be configured to perform control in Fig. 5, regardless of the above description of the respective modules 32, 33.

First, whether either one or both of the left and right wheels are in a deceleration state is determined (step R1). When either one or both of the left and right wheels are in a deceleration state (YES in step Rl), it is determined whether the deceleration difference (difference in speed change amount) between the left and right wheels is greater than a predetermined deceleration difference value (step R2). When the deceleration difference between the left and right wheels is greater than the predetermined deceleration difference value (YES in step R2), it is determined that the drive wheel having a greater deceleration (that is, one of the two shafts) is tending to be locked, and the command torque for the abnormal shaft (that is, the motor 4 for the corresponding drive wheel) is limited (step R3). In addition, the upper limit of the command torque for the normal shaft (that is, the motor 4 for the corresponding drive wheel) is limited (step R4). That is, the command torque is controlled such that the command torque does not exceed the upper limit.

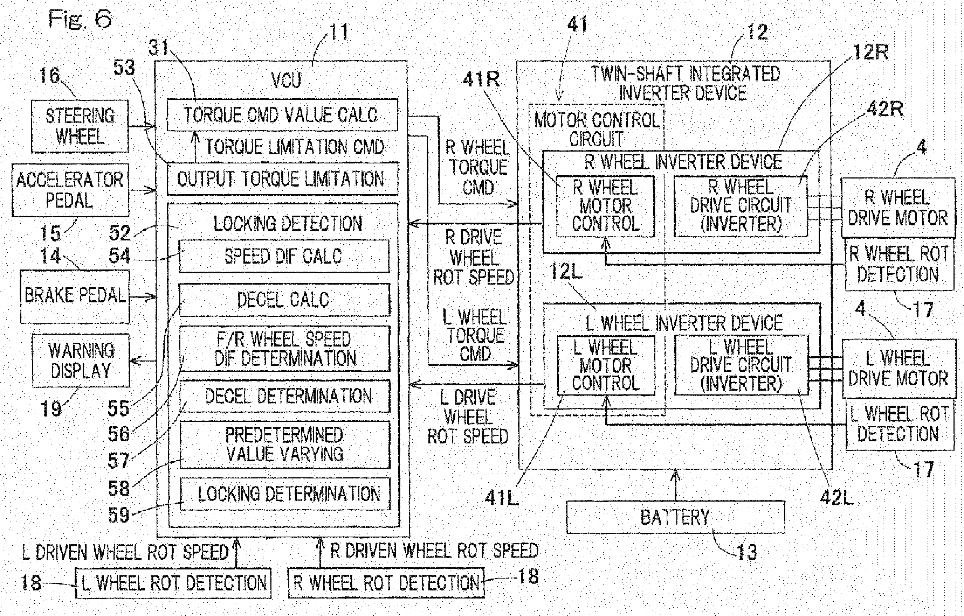

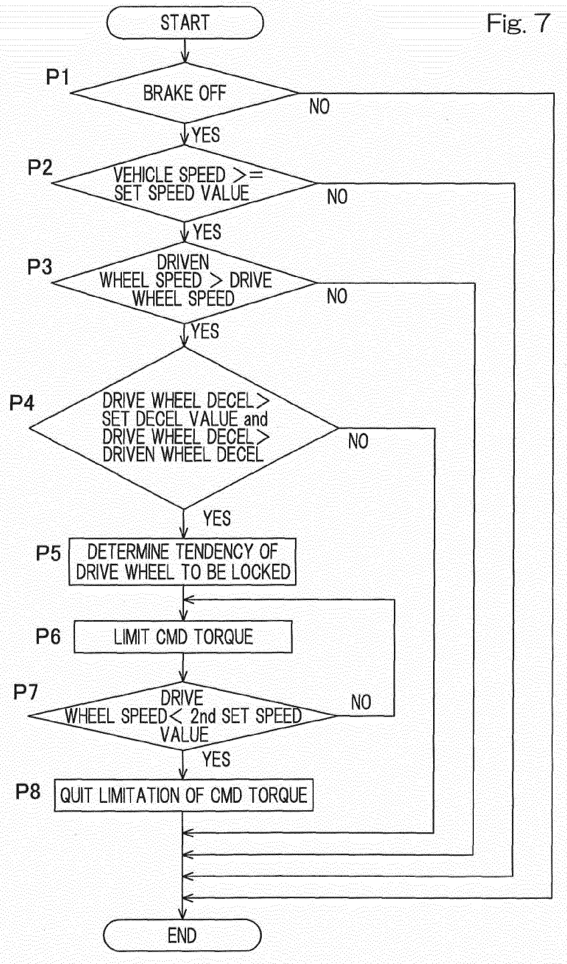

Fig. 6 and Fig. 7 show a second embodiment of the present invention. In this embodiment, a locking tendency is not determined on the basis of the speed difference between and the decelerations of the left and right drive wheels 2, 2 as in the first embodiment, and, provided that either one of a front wheel pair or a rear wheel pair is drive wheels and the other pair is driven wheels, a locking tendency is determined on the basis of the speed difference between and the decelerations of a front wheel and a rear wheel. This embodiment is the same as the first embodiment described with reference to Fig. 1 to Fig. 3 and Fig. 4A to Fig. 4C, except for matters described in particular. In addition, the configuration example of the vehicle shown in Fig. 1 is also applied to this embodiment.

In this embodiment, the VCU 11 also has a locking detection module 52 and an output torque limitation module 53. The locking detection module 52 has a speed difference calculation module 54, a deceleration calculation module 55, a front-rear wheel speed difference determination module 56, a deceleration determination module 57, a predetermined value varying module 58, and a locking determination module 59. The rotation speeds of the driven wheels 3, 3 are inputted from the rotation detection devices 18, 18 to the VCU 11.

In this embodiment, calculation of the rotation speeds and the decelerations of the drive wheels 2, 2 and the driven wheels 3, 3 and the locking determination may be performed separately for the left and right wheels, or the averages or the like of the rotation speeds and the decelerations of the left and right wheels may be used for comparison to corresponding predetermined values or the like.

The speed difference calculation module 54 is configured to calculate the speed difference between the left or right drive wheel 2 and the left or right driven wheel 3 or the speed difference between the drive wheel pair 2, 2 and the driven wheel pair 3, 3, but only needs to merely calculate which the drive wheel 2 (drive wheel pair 2, 2) or the driven wheel 3 (driven wheel pair 3, 3) is faster. The speed difference calculation module 54 may not be provided, and the front-rear wheel speed difference determination module 56 may perform determination directly on the basis of the detection values of the respective rotation detection devices pairs 17 and 18 (or the respective rotation detection devices 17 and 18).

The deceleration calculation module 55 calculates the decelerations of the drive wheel 2 and the driven wheel 3 from the detection values of the rotation detection devices pairs 17 and 18 (or the respective rotation detection devices 17 and 18). The front-rear wheel speed difference determination module 56 determines whether the speed of the driven wheel pair 3, 3 (or the driven wheel 3) exceeds the speed of the drive wheel pair 2, 2 (or the drive wheel 2), on the basis of the detection values of the respective rotation detection devices pairs 17 and 18 (or the respective rotation detection devices 17 and 18). The deceleration determination module 57 determines whether two conditions that the deceleration of the drive wheel pair 2, 2 (or the drive wheel 2) exceeds a predetermined deceleration value and the deceleration of the drive wheel pair 2, 2 (or the drive wheel 2) is greater than the deceleration of the driven wheel pair 3 (or the corresponding driven wheel 3), are satisfied.

In a state where the pedal 14 is not being operated, that is, all the brakes 8 are OFF, when the front-rear wheel speed difference determination module 56 determines that the speed of the driven wheel 3 is higher than the speed of the drive wheel 2 and the deceleration determination module 57 determines that the two conditions are satisfied, the locking determination module 59 determines that the drive wheel 2 is tending to be locked.

When the locking determination module 59 determines that there is a locking tendency, the output torque limitation module 53 limits the command torque for the motors 4, 4, which drive the drive wheels 2, 2, respectively, such that the command torque is equal to zero or is equal to or less than a preset upper limit value. When the locking determination module 59 performs locking determination separately for each of the left and right wheels, the output torque limitation module 53 performs output limitation such that the command torque for the motor 4 for the drive wheel 2 determined to be tending to be locked is equal to zero and the command torque for the motor 4 for the normal drive wheel 2 is equal to zero or is equal to or less than a preset upper limit value.

The above predetermined values are determined as appropriate through designing. In particular, each of the predetermined speed difference value and the predetermined acceleration value is set by the predetermined value varying module 58 to a different value for each of the three running states, that is, during constant-speed running, during acceleration, and during deceleration.

Flow of operation of the locking determination and the output limitation in this embodiment is shown. Specifically, flow of locking detection based on comparison of the speeds/accelerations of the drive wheel, which is a front wheel, and the driven wheel, which is a rear wheel, is shown.

The locking detection module 52 determines whether the brake pedal 14 is not being operated, that is, all the brakes 8 are OFF (step P1). When the brake pedal 14 is not being operated (NO in step P1), the processing is ended and returned to START.

When the locking detection module 52 determines that the brake pedal 14 is not being operated (YES in step P1), the locking detection module 52 subsequently determines whether the vehicle speed exceeds a predetermined speed value (step P2). When the vehicle speed does not exceed the predetermined speed value (NO in step P2), the processing is ended and returned to START.

When the locking detection module 52 determines that the vehicle speed exceeds the predetermined speed value (YES in step P2), the speed difference calculation module 54 determines whether the driven wheel speed exceeds the drive wheel speed (step P3). When the speed difference calculation module 54 determines that the driven wheel speed does not exceed the drive wheel speed (NO in step P3), the processing is ended and returned to START. When the speed difference calculation module 54 determines that the driven wheel speed exceeds the drive wheel speed (YES in step P3), the deceleration determination module 57 determines whether two conditions that the deceleration of the drive wheel 2 exceeds a predetermined deceleration value and the deceleration of the drive wheel 2 is greater than the deceleration of the driven wheel, are satisfied (step P4).

When the deceleration determination module 57 determines that the conditions are not satisfied (NO in step P4), the processing is ended and returned to START. When the deceleration determination module 57 determines that the two conditions are satisfied (YES in step P4), the locking determination module 59 determines that the drive wheel 2 is tending to be locked (step P5).

When the locking determination module 59 determines that the drive wheel 2 is tending to be locked, the output torque limitation module 53 limits or reduces the command torque for the motor 4 for the drive wheel 2 (step P6). In a state where the command torque is limited, that is, in an output limitation state, the locking detection module 52 monitors the rotation speed of the drive wheel 2 until the rotation speed becomes less than a predetermined speed value for locking release (second predetermined speed value) (step P7). When the rotation speed becomes less than the predetermined speed value for locking release, the torque limitation is quitted (step P8).

The flowchart in Fig. 7 illustrates locking detection for the one drive wheel 2 and the driven wheel 3 at the same side, but this process is also applied to the left and right drive wheels 2, 2 and the left and right driven wheels 3, 3.

Also in the case of performing determination for the front and rear wheels as in this embodiment, similar to the case of performing determination for the left and right wheels, advantages that a tendency of a wheel to be locked can be immediately detected, thereby contributing to ensuring safety of the vehicle, and the number of rotation speed detection devices can be reduced, are obtained.

Although the case of the front-wheel drive vehicle has been described above in each embodiment, the present invention can also be applied to a rear-wheel drive vehicle. In addition, in the case of the embodiment described with reference to Figs. 6 and 7 in which determination is performed for the front and rear wheels, the present invention can be applied to even a one-motor type vehicle.

Although the present invention has been fully described in connection with the preferred embodiments thereof with reference to the accompanying drawings, numerous additions, modifications or omissions can be made without departing from the gist of the present invention. Accordingly, such additions, modifications or omissions are to be construed as included in the scope of the present invention.

### [Reference Numerals]

- 2: drive wheel
- 4: motor
- 8: brake
- 14: brake pedal (brake operation mechanism)
- 17: rotation detection device
- 34: speed difference calculation module
- 35: deceleration calculation module
- 36: left-right wheel speed difference determination module
- 37: deceleration determination module
- 39: locking determination module

## Claims

1. A vehicle control device for controlling left and right electric motors in a vehicle, the vehicle including
the left and right electric motors for individually controlling torque to be applied to respective left and right drive wheels, the left and right drive wheels forming a pair of front wheels or a pair of rear wheels,
left and right rotation detection devices configured to detect rotation speeds of the respective left and right drive wheels, each of the rotation detection devices being configured to monitor rotation at a location between a corresponding motor of the left and right motors and a corresponding drive wheel of the left and right drive wheels to detect a rotation speed of the corresponding drive wheel, and
brakes configured to brake respective wheels of the pair of front wheels and the pair of rear wheels, the vehicle control device comprising:
a speed difference calculation module configured to calculate a speed difference between the left and right drive wheels from the rotation speeds detected by the respective left and right rotation detection devices;
a deceleration calculation module configured to calculate decelerations of the left and right drive wheels from the rotation speeds detected by the respective left and right rotation detection devices;
a left-right wheel speed difference determination module configured to determine whether the speed difference calculated by the speed difference calculation module exceeds a first predetermined speed difference value;
a deceleration determination module configured to determine whether a deceleration of a first drive wheel of the left and right drive wheels having a lower rotation speed exceeds a predetermined deceleration value and is greater than a deceleration of a second drive wheel of the left and right drive wheels having a higher rotation speed, the rotation speeds of the first and second drive wheels being detected by the respective rotation detection devices; and
a locking determination module configured to determine that the first drive wheel is tending to be locked when the left-right wheel speed difference determination module determines that the speed difference exceeds the first predetermined speed difference value and the deceleration determination module determines that the deceleration of the first drive wheel exceeds the predetermined deceleration value and is greater than the deceleration of the second drive wheel, in a state without manipulation of a brake operation mechanism for operating the brakes.

2. The vehicle control device as claimed in claim 1, further comprising an output torque limitation module configured to, when the locking determination module determines that the first drive wheel is tending to be locked, limit command torque for the motor corresponding to the first drive wheel, to zero, and limit command torque for the motor corresponding to the second drive wheel, to zero or a preset value greater than zero.

3. The vehicle control device as claimed in claim 2, wherein after staring to limit the command torque for the motors corresponding to the first and second drive wheels, respectively, the output torque limitation module quits limiting the command torque for the motors and cancels the determination by the locking determination module that the first drive wheel is tending to be locked when the speed difference calculated by the speed difference calculation module is reduced below a second predetermined speed difference value.

4. The vehicle control device as claimed in any one of claims 1 to 3, wherein each of the first predetermined speed difference value and the predetermined deceleration value varies among during constant-speed running, during accelerated running, and during decelerated running.

5. A vehicle control device for controlling electric motors in a vehicle in which left and right wheels that are either left and right front wheels or left and right rear wheels are drive wheels driven by the electric motors, and the other left and right wheels are driven wheels, the vehicle including
rotation detection devices configured to detect a rotation speed of at least one of the drive wheels and a rotation speed of at least one of the driven wheels, respectively, the at least one of the driven wheels corresponding to the at least one of the drive wheels, and
brakes configured to brake respective wheels of the left and right front wheels and the left and right rear wheels, the vehicle control device comprising:
a deceleration calculation module configured to calculate a deceleration of the at least one of the drive wheels and a deceleration of the at least one of the driven wheels from the rotation speeds detected by the respective rotation detection devices;
a front-rear wheel speed difference determination module configured to determine whether the speed of the at least one of the driven wheels exceeds the speed of the at least one of the drive wheels, on the basis of the rotation speeds detected by the respective rotation detection devices;
a deceleration determination module configured to determine whether the deceleration of the at least one of the drive wheels exceeds a predetermined deceleration value and the deceleration of the at least one of the drive wheels is greater than the deceleration of the at least one of the driven wheels; and
a locking determination module configured to determine that the at least one of the drive wheels is tending to be locked when the front-rear wheel speed difference determination module determines that the speed of the at least one of the driven wheels exceeds the speed of the at least one of the drive wheels and the deceleration determination module determines that the deceleration of the at least one of the drive wheels exceeds the predetermined deceleration value and the deceleration of the at least one of the drive wheels exceeds the deceleration of the at least one of the driven wheels, in a state without manipulation of a brake operation mechanism for operating the brakes.

6. The vehicle control device as claimed in any one of claims 1 to 5, wherein when the brakes operate, the locking determination by the locking determination module is stopped.

7. The vehicle control device as claimed in any one of claims 1 to 6, wherein each of the motors is formed in a corresponding in-wheel motor drive device.
